# EUROPEAN PATENT APPLICATION

(11) **EP 2 854 008 A1**
(43) Date of publication of application: **01.04.2015**
(21) Application number: 13306353.7
(22) Date of filing: 30.09.2013
(51) Int. Cl.: G06F 3/0488

(54) **Method to deduce topography of a group of devices**

(71) Applicant: Orange, 75015 Paris (FR)
(72) Inventor: Leveque, Laurent, LONDON, W37TT (GB); Faidy, Diane, LONDON, W149SR (GB); Diarrassouba, Valy, LONDON, W67EP (GB)

(57) **Abstract**

Present system discloses a method for characterizing a touch input received on a touch screen of an electronic device, the method comprising for said electronic device the steps of detecting the initiation portion of the touch input, advertizing a first message comprising an information about the detection of the entry of a continuous user gesture on the touch screen, detecting the end portion of the touch input and advertizing a second message comprising an information about the detection of the termination of the continuous user gesture or advertizing a third message comprising information about the detection of the exit of the continuous user gesture.

## Description

### FIELD OF THE PRESENT SYSTEM:

The present invention relates generally to interconnected electronic devices, more particularly to the determination of the topography of a plurality of electronic devices placed next to the others.

### BACKGROUND OF THE PRESENT SYSTEM:

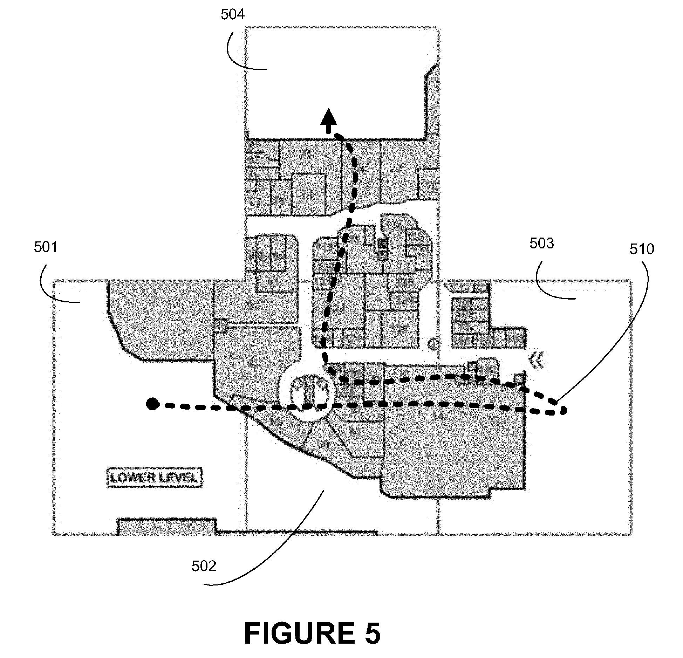

Electronic devices (in short, device) such as mobile phones or tablets are widely used by users to watch photos or movies. A user with several electronic devices may want to aggregate these electronic devices together as to reconstitute a virtual screen stretched over the different screens of the plurality of electronic devices. Several users watching a same content on their mobile phones or tablet may want to share their devices, by placing them one next to the other, as to reconstitute a bigger virtual screen instead of watching the same content each on its own device. More different scenarios exist, but in all these situations, several electronic devices are placed next to the other, their screens being shared as to simulate a bigger virtual screen or single virtual display (see FIG. 5 as an illustration of such single virtual display or screen).

When several devices are sharing their screens to simulate a bigger virtual screen, a content to be displayed (photo, video ...) is divided in several portions, each portion being displayed on a given device. Thus, to achieve such result, a technology to position or locate the different devices according to the position of the other devices is necessary in order to be able to share the device's screens and to display correctly the different portion of the content on the screen's devices.

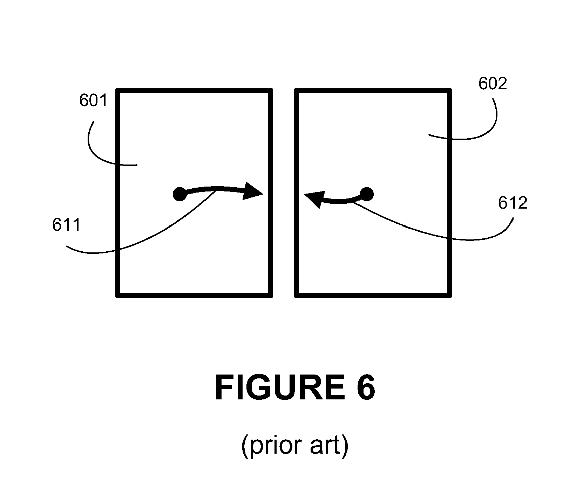

The *Tokyo University* of Technology disclosed such a technology, called "Pinch", to connect the displays or screens of multiple devices simultaneously. More precisely, the University disclosed a technology to connect two devices with touch screens together, a user being able to connect a plurality of devices by adding them one by one. The technology relies on the detection of simultaneous gestures on two devices. When such simultaneous gestures are detected, the two devices may be connected and share their screens or displays. The technology also uses location characteristics of the user gesture for both device touch screens to deduce how the devices are placed in respect to one another. Indeed, in a first step, the different devices need to install and execute a same application. Then, a user may place one device next to another, place one finger on the screen of each device and then makes a "pinch" gesture - that is to say, a gesture where the two fingers are brought closer as in a pinch or a squeeze, as illustrated in FIG. 6. Each device 601 and 602 sends information on the detected gesture 611 and 612 to a central server. This central server will decide to connect two devices when simultaneous gestures are detected on the two devices. Moreover, according to characteristics of each gesture - mainly the location of the gesture on the touch screen - the central server will be able to determine the location (i.e. how shifted the screens are with respect to one another) of the two devices respectively to one another. Thus, a group of devices may be built by using this method with one device belonging to the group and a device to be added to the group. The central server is then able to deduce the position of each device respectively to the others and calculate topography of the group of devices. It may then, depending on the characteristics of each display (resolution, size...), be able to calculate the different portions of a content to be shared on the virtual single screen and sends the different portions to the adequate device.

However, with many electronic devices, the previously disclosed method is tedious as it needs to repeat the same gesture for every device to be added to the group of devices.

Indeed, there is a need today to improve the method of deducing the topography of a group of devices.

### SUMMARY OF THE PRESENT SYSTEM:

It is an object of the present system to overcome disadvantages and/or make improvements in the prior art.

Present system discloses a method for characterizing a touch input received on a touch screen of an electronic device, a first and a second zones being defined on the touch screen, the touch input comprising an initiation portion and an end portion, wherein the first zone corresponds to the entry of a continuous user gesture coming from or the exit of the continuous user gesture going on to another electronic device placed next to the electronic device, the second zone, or STOP zone, corresponds to the termination of the continuous user gesture on the touch screen of the electronic device, the method comprising for said electronic device the steps of detecting the initiation portion of the touch input at a first location on the touch screen, advertizing a first or IN message comprising geographical information defined according to the first location, the IN message comprising an information about the detection of the entry of a continuous user gesture on the touch screen of the device, detecting the end portion of the touch input at a second location on the touch screen and when the second location is within the STOP zone, advertizing a second or STOP message, the STOP message comprising an information about the detection of the termination of the continuous user gesture, or advertizing a third or OUT message comprising geographical information defined according to the second location, the OUT message comprising information about the detection of the exit of the continuous user gesture.

This advantageously allows characterizing a touch input detected on a touch screen of an electronic device according to the initiation portion and the termination portion of said touch input, and, when devices of a group of device execute such method, characterizing a continuous user gesture started on a first device of the group, going over the devices of the group and terminating on one device of the group. In particular, this system allows detecting, characterizing with geographical information and advertizing an entry of a continuous user gesture on the touch screen of a device. It further allows distinguishing between a continuous user gesture going over the electronic device touch screen and a continuous user gesture terminating on the electronic device touch screen and advertizing such distinction. Moreover, when detecting that the continuous user gesture is going over the electronic device touch screen the exit of the continuous user gesture is characterized with geographical information and advertized.

In one embodiment of present system, the first zone comprises at least a portion of the periphery of the touch screen.

As the first zone should correspond to the entry of a continuous user gesture coming from or the exit of the continuous user gesture going on to another electronic device placed next to the electronic device, it is advantageous to include at least the periphery of the touch screen. Indeed, a continuous user gesture coming from or going to another device will be firstly detected on the touch screen of the electronic device near the edge or periphery of said touch screen. Moreover, after calculating a topology of the group of devices, and in order to position the devices correctly one to the other, geographical information defined according to the first or second location should be as close as possible to the periphery or edge of the touch screens.

In a complementary embodiment of present system, the first zone comprises the entire periphery of the touch screen, the second or stop zone being surrounded by the first zone.

Advantageously, the STOP zone is being chosen central on the touch screen in order to easily and intuitively be identified it by the user.

In an alternative embodiment, the electronic device advertizes a fourth or START message, the START message comprising information about the detection of the initiation of the continuous user gesture.

Advantageously, the START message starts the method of the system, possibly starting over after an incorrect continuous user gesture. Indeed, it allows a reset of previously received information and indicates that the initiation of a continuous user gesture has been detected on an electronic device.

In another alternative embodiment, a third or START zone is defined on the touch screen, the START zone corresponds to the initiation of the continuous user gesture on the touch screen of the electronic device. The device, after detecting the initiation portion and when detecting that the first location is within the start zone, advertizes the START message in place of the IN message.

Advantageously, a START zone is defined on the touch screen in order to materialize for the user of present system where to initialize or start a continuous user gesture. Associating a START message to the detection of the initiation of a continuous user gesture allows advertizing such detection.

In a complementary embodiment, the START zone and the STOP zone are chosen to be equal.

This advantageously allows an easiest implementation, particularly by simplifying the user interface.

In an alternative embodiment, the electronic device advertizes the IN message as a START message if the electronic device has not received a START message.

This advantageously allows an embodiment of present system without using a START zone.

In a complementary embodiment, the advertising of a start, stop, in or out message corresponds to a broadcasting of the messages.

This advantageously allows an implementation of present system without relying on a central server, each electronic device of a group of devices being able to receive the advertized messages.

In a complementary embodiment, the START, STOP, IN or OUT messages comprise the time stamp of the detection of the touch input at their corresponding location.

This advantageously permits to reorder the messages according to the order of the detection of the touch input if the messages are not received in the right order. This could be particularly advantageous with high latency networks or if an electronic device, for any reason, advertize messages with a high latency after the detection of a touch input.

In a complementary embodiment, the electronic device receives a plurality of messages from at least another electronic device, each message being one of an IN, OUT, START or STOP message and determines, after receiving a STOP message, the position of the electronic device with regards to the at least another electronic device, using the received messages.

Advantageously, by using the received messages advertized according to present system, an electronic device may position itself relatively to other electronic devices, determining the topology of a group of devices. Further information exchanged such as screen resolution or screen size, combined with this topology permits to calculate a single virtual display and to share content on it.

In an alternative embodiment, after detecting the initiation portion of the touch input at a first location, when detecting that the first location is not within the START zone and no START message has been received, the electronic device advertizes a RESET message in place of the IN message.

In another alternative embodiment, after detecting the initiation portion of the touch input at a first location, when detecting that the first location is within the START zone and a START message has been received, the electronic device advertizes a RESET message in place of the START message.

In a further alternative embodiment of present system, after detecting the end portion of the touch input at a second location, when detecting that the second location is within the STOP zone, the electronic device advertizes a RESET message in place of the STOP message

These three previous alternative embodiments permit to discard all previously received messages and re-initialize the system when an incorrect continuous user gesture has been detected.

Another object of the invention is an electronic device comprising a touch screen, the electronic device further comprising a processor arranged to:
- detecting the initiation portion of a touch input at a first location on the touch screen,
- advertizing a message according to the first location on the touch screen,
- detecting the ending portion of the touch input at a second location on the touch screen,
- advertizing another message according to the second location on the touch screen.

Another object of the invention concerns a computer program or application program, in particular computer programs on or in a non-transitory computer readable medium, suitable for implementing the method to deduce topography of a group of devices. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary embodiment of an electronic device according to present system;
FIGs. 2A and 2B show an exemplary user interface displayed on the touch screen of an electronic device according to an embodiment of the present system;
FIGs. 3A and 3B show an exemplary illustration of user gestures on the touch screens of a group of electronic devices according to one embodiment of present system;
FIG. 4 shows an exemplary flowchart of one embodiment of present system;
FIG. 5 shows an exemplary illustration of a single virtual screen or display created from the touch screens of a group of electronic devices;
FIG. 6 shows an illustration of the Tokyo University of Technology method "Pinch" (prior art).

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

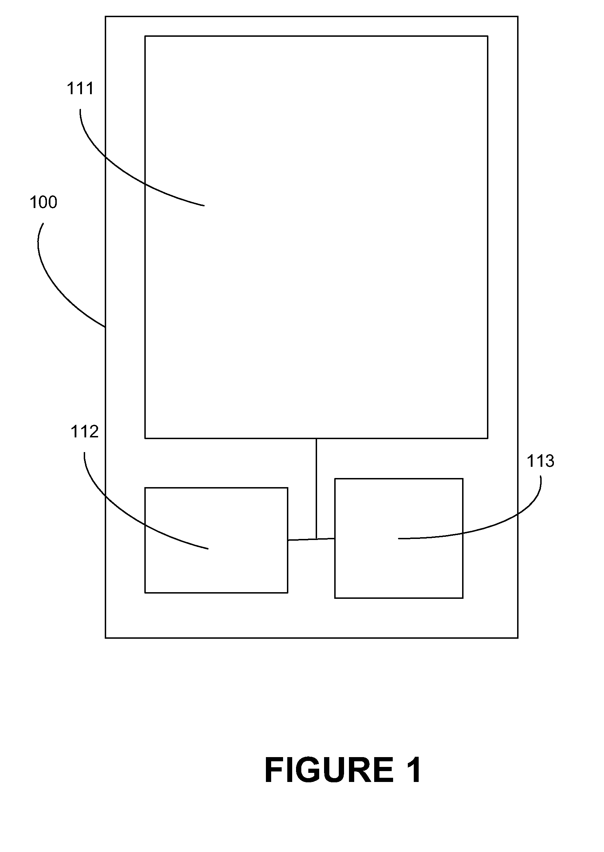

FIG. 1 is an illustration of an exemplary electronic device or mobile device (or in short, device) 110 used in one embodiment of the present system. The mobile device 110 comprises at least a touch screen or display 111, a processor 112, optionally a controller 113 of the display 111, and possibly others module not represented here. Mobile device 110 may be for instance a mobile phone, a smartphone, a PDA (Personal Digital Assistant), a tablet ...

Particularly, the electronic device 100 comprises at least a network module, for example a Wi-Fi, Bluetooth, 3G, or any type of network technology module.

In the present system, the user interaction with and manipulation of an application program executed on the device 100 and rendered on a Graphical User Interface (GUI) are achieved using the display or touch screen 111, which is presently a touch panel operationally coupled to the processor 112 controlling the displayed interface.

Processor 112 may control the rendering and/or the display of the GUI on the display device 111 depending on the type of application program, i.e. resident or web-based. Processor 112 may also handle the user entries according to the present method. The user entries or user gestures to interact with an application program may be provided through interactions with the touch panel 111 and will be called hereafter touch inputs.

The touch panel or touch screen 111 can be seen as an input device allowing interactions with one or more fingers of a user or other devices such as a stylus. The input received from one or more user's touch is sent to the processor 112. The touch panel is configured to detect and report the (location of the) touches inputs to the processor 112 and the processor 112 can interpret the touché inputs in accordance with the application program and the currently displayed GUI. For example, the processor 112 can initiate a task, i.e. a control of an application program, in accordance with a particular touch input.

The touch panel may be transparent and placed over the display element, as it is commonly done with a smartphone or an electronic tablet.

In one complementary embodiment, the touch screen or touch display may be a multi-touch screen or display, being able to detect a plurality of touch inputs at the same time.

The optional controller 113, i.e. a dedicated processor, can be used to process the plurality of touch inputs locally and reduce demand for the main processor 112 of the computer system. The touch panel 111 can be based on sensing technologies including but not limited to capacitive sensing, resistive sensing, surface acoustic wave sensing, pressure sensing, optical sensing, and/or the likes. Here after, for simplification purpose, reference will be made to one or more fingers of the user touching panel 111, other devices such as a stylus may be used in place of the user fingers.

Henceforth, according to the sensing technology of the touch display 111, the term "touching" should be here after interpreted for example as "touching", "hovering", "pushing", "pressing" or any other term adapted to the sensing technology used.

In the present system, once the type of touch input has been captured and identified, the captured touch input may be referred to as a touch input event (or touch input in short) that allows imparting a control on an application program.

Slide or swipe gesture should be understood as a gesture or touch input where one or more fingers touch the touch display 111 and move in one direction. Sliding or swiping gestures are henceforth not distinguished, but it should be noted that sometimes wipe gesture is considered by the man skilled in the art as a slide gesture with somehow shorter movement along the same direction. We shall not make such distinction.

Device 100 may also comprise storage module to store database, or possibly, may access a remote database through a network connection.

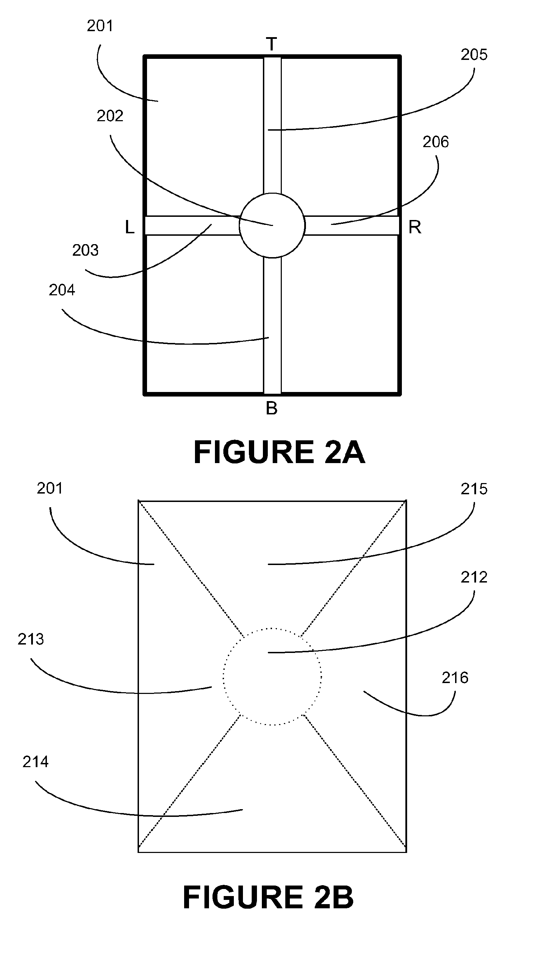

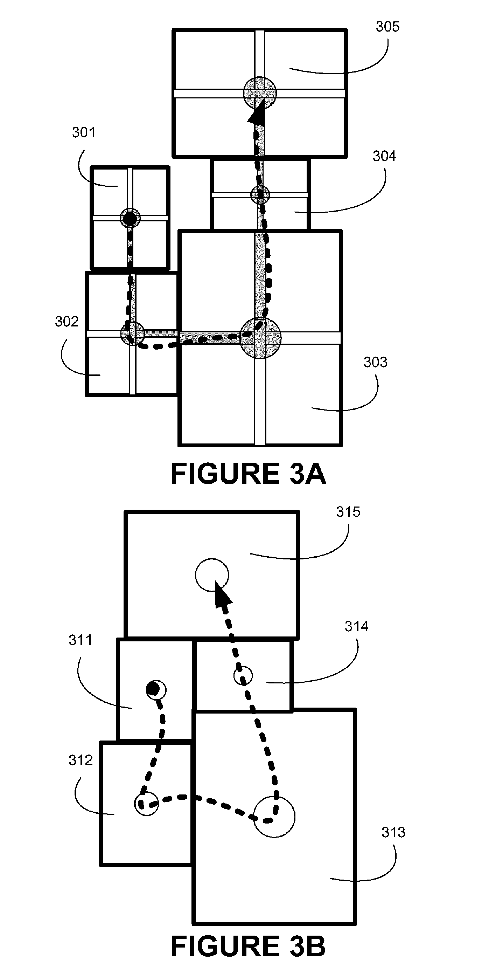

FIGs. 2A and 2B show an exemplary user interface displayed on the touch screen of an electronic device according to an embodiment of the present system. This embodiment would correspond to the FIG. 3A illustration. Indeed, in this case, in order to improve the user interaction design and simplify the ergonomic of the application program, the way devices may be placed next to any other device is limited to four possibilities. FIG. 2A is an illustration of the GUI of an application program implementing this embodiment of present system. A user looking at a device 100 will see the GUI 201 rendered on the touch screen 111. The GUI 201 will show at least five predefined graphical objects as such:
- a graphical object 202, ideally rendered in the center of the GUI 201, and materialized to the user for example by displaying a colored circle;
- four graphical objects 203, 204, 205 and 206, respectively connecting the graphical object 202 to:
   o the left side of the GUI, or L,
   o the bottom side of the GUI, or B,
   o the top side of the GUI, or T, and
   o the right side of the GUI, or R.

When saying "right side" it should be understood to the "middle of the right edge of the touch screen", and so on.

At the same time, as shown in FIG. 2B, five zones have been defined on the GUI 201, corresponding to five zones on the touch screen 111. Each zone is associated to previously described graphical objects, that is to say:
- central zone 212 is associated to the graphical object 202, the size of the zone and the graphical object being possibly chosen equal or not. Thus, possibly, the zone 212 may overlap the graphical object 202 to facilitate user interaction,
- zones 213, 214, 215 and 216 are respectively associated to graphical objects 203, 204, 205 and 206. A zone size may be chosen equal to the graphical object it is associated to, or not.

As said in the beginning of FIGs. 2 description, the idea of this implementation is to facilitate user comprehension of way the present system works by predefining possible connection between the devices. Thus, in this implementation of present system, when placing two devices next to the other, the user should take care that the graphical object 203, 204, 205 or 206 of the first device is aligned with the corresponding graphical object displayed on the GUI of the second device. That is to say, referring to FIG. 3A and taking for example devices 301 and 302, each device displaying the same GUI described in FIG. 2A, that the graphical object 204 (bottom) of device 301 should be aligned by the user with graphical object 205 of device 302 for proper working of present system in this embodiment. In other words, one of the position T, R, B and L, corresponding respectively to the middle of the top, right, bottom and left edges of the device should be facing one of this four position T, R, B or L of the device placed next to it. For example, as illustrated in FIG. 3B, bottom position B of device 301 is facing top position B of device 302 (considering that both devices display have not been orientated differently).

Possibly, in a complementary embodiment of present system, a user input detected in a zone will trigger an animation of the corresponding graphical object, giving a visual feedback to the user of its gesture. In FIG. 3A, such visual feedback is rendered by graying of the concerned graphical objects.

The way the GUI described in present FIGs. 2A and 2B is used within an embodiment of present system is described more in details in the description of FIG. 3A.

FIGs. 3A and 3B show an exemplary illustration of user gestures on the touch screens of a group of electronic devices according to one embodiment of present system.

In FIG. 3A and 3B, graphical objects 301, 203, 303, 304 or 305 may correspond to the GUI displayed on the touch screen of a device. Nevertheless, for simplicity sake, 301, 203, 303, 304 and 305 are referred to as device hereafter. Indeed, especially for electronic devices or device such as tablets, touch screen, or the displayed GUI rendered on the touch screen, tends to occupy most of the surface of the device.

FIGs. 3A and 3B illustrate one embodiment of the system and more precisely show which continuous gesture a user should perform over the different devices of the group of devices:
(1) firstly, the user initiates or starts his continuous user gesture from central zone 212 of device 301,
(2) user gesture goes from device 301 to device 302, going over zones such as 213, 214, 215 or 216 of both devices,
(3) user gesture passes over the central zone 212 of device 302 (it is to be noted that this step is optional according to the embodiment of present system),
(4) user gesture goes from device 302 to device 303, going over zones such as 213, 214, 215 or 216 of both devices,
(5) steps (3) and (4) are repeated with the next devices 303, 304 and 305,
(6) user stops or terminates his gesture on the central zone 212 of device 305.

From the user point of view, the gesture is continuous, meaning that the user smoothly glides or slips his finger (or stylus...) from the first device 301 central zone 212 to the last device 305 central zone 212 going over the touch screens of devices 302, 303 and 304..

In other words, in the FIGs. 3A and 3B, device 301 is the device detecting the initiation of the continuous user gesture when device 305 is the one detecting the termination of the continuous user gesture. Meanwhile, each device 302, 303 or 304 detects an entry of a user gesture (for example, on device 303, the portion of the continuous user gesture from device 302 to device 303) and an exit of a user gesture (for example, on device 303, the portion of the continuous user gesture from device 303 to 304). Every time, touch inputs are detected on the respective touch screen of the devices corresponding to this description of the continuous user gesture. In short, each device shall implement a method to detect and act according to the user inputs detected in order to implement the present system.

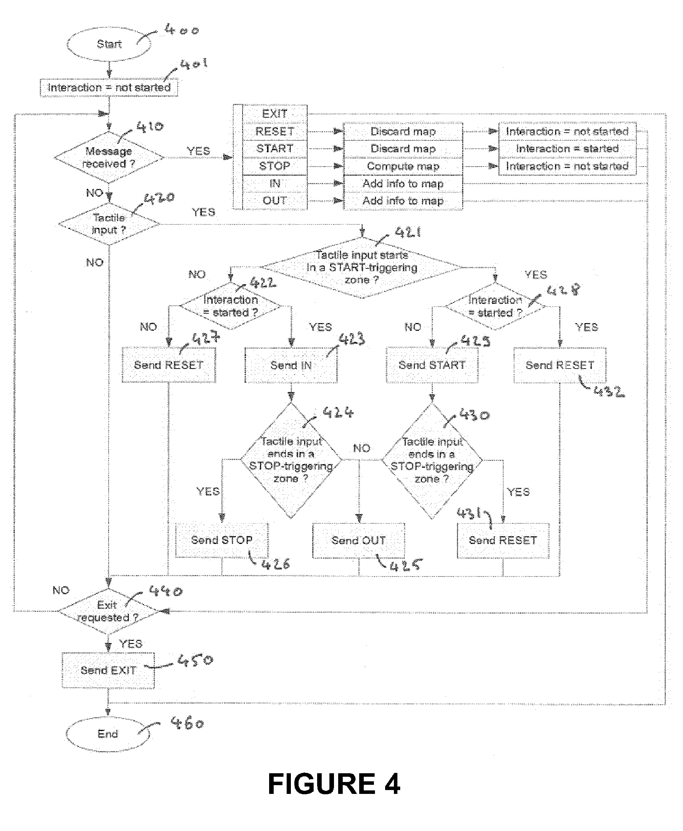

FIG. 3A corresponds to an embodiment of present system using the GUI described in FIG. 2A and based on the different zones described in FIG. 2B. In this embodiment, to help the user position the devices of the group of devices next to one another, the same GUI described in FIG. 2A is displayed on each device 301, 203, 303, 304 and 305. As shown in FIG. 3A, the devices 301 to 305 are placed by the user in order to get the different graphical objects in line, or, as a result, a middle of edge of a device is placed next to the middle of an edge of another device. Devices 301 to 305 are typically tablets laid over a table, or possibly hung on a wall. As it will be explained later when describing FIG. 4, an application program has been launched previously to get the devices to display the same GUI. In the example described in FIG. 3A, the user begins a user gesture over the central zone 212 indicated by the graphical object 202, meaning that the user initiates a touch input, either with his finger, a stylus, or any means depending on the sensing technology used by the touch screen, the touch screen of device 301 within the zone 212 of the GUI displayed on device 301. A visual feedback such that the coloring of the graphical object 212 may be performed as illustrated on FIG. 3A. The user then pursue his gesture toward the device 302, passing over the central zone 212 of the GUI of device 302 and going toward the next device, that is to say the device 303. More generally, in the embodiment disclosed here, the user starts a user gesture within the central zone of the first device 301, goes over the central zone of the different devices until the user gesture reaches the last device, here the device 305. Such user gesture, from the device 301 to device 305, may be divided into a succession of touch inputs on each device but should be considered, from the user point of view, as a continuous user gesture from the first to the last device. In other words, the discontinuities introduced in the user gesture by moving from a first to a second device (e.g. going from devices 302 to 303), if experienced by the different devices through the discontinuities in touch inputs, are not from the user's point of view as he moves his finger across the devices screens.

Comparing to the prior technology disclosed in the background part of present document, the user does not have to repeat four "pinch" gestures - between respectively devices 301 and 302, then devices 302 and 303, then devices 303 and 304 and finally between devices 304 and 305 - to get the group of devices to share their screens. Such four repeated gestures are advantageously replaced in present system by a continuous gesture more intuitive from a user perspective.

FIG. 3B discloses an alternative embodiment of present system. Indeed, in the embodiment presented in FIG. 3A, in one hand, the different graphical objects on the GUI help the user and guide his continuous gesture. In FIG. 3A, devices are placed next to the others by "centering" them, meaning that the center, or better said, the middle of an edge of a device should correspond to the center or middle of an edge of the device next to it. As illustrated in FIG. 3A, the final result may not be satisfactory for a user as the single virtual screen constituted in this case suffers from gaps, notably due to the different sizes of the device screens. In other words, the single virtual screen obtained as a final result is not a continuous or gapless virtual screen.

Embodiment disclosed in FIG. 3B allows a more compact assembly by placing a device next to the other without a gap. From a user perspective, the continuous gesture disclosed in FIG. 3A is still used, but this time no guide such as the GUI displayed on FIG. 2A is used. Instead of using predefined zones 213, 214, 215 or 216 of FIG. 2B, in this embodiment, the exact location of the initiation or starting location and the ending or termination point of a user input or touch input on a touch screen of a device is used to determine the position of the junction between two devices. This advantageously allows getting a no-break or gap free continuous single virtual screen as a result. Main difference between the embodiment presented in FIG. 3A and 3B is that in FIG. 3A, four predefined point of junction are used for a device (see FIG. 2A, points T, R, B and L), whereas in FIG. 3B, junction between a first and second devices is calculated according to the termination location of a touch input on a first device and the initiation or starting location of another touch input on a second device, said touch input corresponding to the continuation of the same user gesture from the first to the second device.

FIG. 4 shows an exemplary flowchart of one embodiment of present system. In the embodiment described hereafter, the method to deduce or compute the topology of the group of devices is executed by each device of a group of devices, meaning that each device would calculate - from the same inputs as all messages described hereafter in FIG. 4 are broadcasted to the group of devices - the topography of the group of devices. This advantageously allows the method to be used without any need for a central server or a master device as the method is fully distributed. Nevertheless, the same method may be implemented via a central server. In this case, instead of broadcasting all the messages, the devices may send the messages to a central server. In one implementation, one or several of the devices among the group of devices may act as the central server or master device.

It should be noted that every device is identified with an ID. Such ID may be for example the IP address used on the network, a MAC address, an ID given by a central server, or any other ID. This ID, unless said otherwise, is sent along any message a device may advertize or send. This is quite well known technology if for example the ID chosen to identify a device is its IP address.

It should also be noted that, according to the embodiment, all the devices may be synchronized. Due to the latency of current local networks, such feature may not be useful, but for high latency networks, or networks with frequent error or message re-emitted, time tagging of messages may be useful.

In the embodiment described, all the devices may be for example tablets or smartphones connected to a same local area network. This is commonly the case of a group of devices connected to a same Wi-Fi access node, particularly private Wi-Fi access node. In this case the devices are using IP addresses from a same subnet and may communicate one to the other, or broadcasting messages, easily. The man skilled in the art knows about other networks technologies to allow a group of devices to be interconnected.

In a preliminary step (not shown in FIG. 4), hypothesis is made that the devices have been placed next to the others by the user(s) in order to be used together as a virtual single screen. The devices may be laid on a table for example. FIGs. 3A or 3B is an example of such positioning of five devices next to the others.

Thus, in a first step 400, all the devices of the group of devices shall launch and execute a same application program. Possibly, application programs on the devices may be different application programs, but such application programs shall comprise a module implementing the present system. This would be particularly the case for example with a group of devices based on different OS. Indeed, an application program may be used on iOS™ devices when another application program shall be used on Android™ devices. Said application could be either embedded within the OS or downloaded from any server, possibly through an "application store" such as AppStore™ or Google Play™.

An optional step (not shown in FIG. 4) of pairing between the devices may be needed to allow the devices to be interconnected.

Each device may have or may not have a previous knowledge of the other devices beforehand. In fact, as it will be disclosed hereafter the group of devices will be defined according to the user gesture.

According to the embodiment of present system, a GUI will be displayed on each device, possibly similar to the examples given in FIG. 2A, 3A or 3B. Such GUIs are mainly used to guide and help a user to use the present continuous user gesture, for example by providing a visual feedback to the user gesture, but are not mandatory to implement the system.

In the following steps, as said before, we shall insist on an embodiment where each device executes the steps of the system, but the man skilled in the art would know how to implement similar system using a central server. From this point, the system is described from the point of view of any particular device of the group of devices.

It should be noted also that when it is written that a device is advertizing or broadcasting a message, it should be understood that a copy of the same message is also received or kept by the same device, so as to save it for later computation of the devices topology.

A first and a second zone are predefined on the touch screen of the electronic device.

In one complementary embodiment, the first zone corresponds to the initiation or termination zone of a touch input on the touch screen zone, said touch input corresponding to a continuous user gesture started from or going to another electronic device placed next to the electronic device. In other words, the first zone corresponds to the entry of a continuous user gesture coming from or, the exit of the continuous user gesture going on to another electronic device placed next to the electronic device.

The second zone corresponds to a termination of a touch input, said touch input corresponding to a continuous user gesture terminating on the touch screen of the electronic device. In other words, the second or STOP zone corresponds to the termination of the continuous user gesture on the touch screen of the electronic device.

Alternatively, the first zone comprises at least the edge of the touch screen, and the second or STOP zone of the touch screen is encircled within the first zone.

Alternatively, the first zone comprises at least a portion of the periphery of the touch screen.

Alternatively, the first zone comprises the entire periphery of the touch screen and the second or STOP zone is surrounded by the first zone.

In other words, the first zone predefined on the touch screen should include the edge or periphery of the touch screen, or more precisely zones of the touch screen that possibly may be crossed over by a continuous user gesture coming from or going to another device. Whereas, the second or STOP zone predefined on the touch screen should correspond to the zone on the touch screen where a user may terminate or end a continuous user gesture from another device.

In an additional embodiment of the present system, the first and second zones are complementary, covering the whole surface of the touch screen. But, in some embodiment, they may not cover together all the surface of the touch screen.

A third zone is also predefined, called START zone. The START zone corresponds to the initiation of the continuous user gesture.

For simplicity sake, we shall consider hereafter that the START and STOP zones are chosen to be equal, meaning that hereafter we shall consider START and STOP zones as a same predefined zone. Alternative embodiment may consider that the two zones are differently predefined.

In the step 401, the application program executed on the device will set an internal variable or parameter "Interaction" to the value of "false". This step corresponds to the initiation of the system, the internal variable indicating that the interaction has not started yet. By convention, it should be understood later that the "interaction" internal parameter value or flag, is used as such:
- true: indicates that the interaction process has been started by receiving or advertizing a START message,
- *false:* indicates that interaction has not been started, no START message has been received or advertized yet.

The man skilled in the art will know various techniques as to manage differently this internal parameter or flag "interaction".

The device may also, either in the step 400 or 401 initiate a database, or access to a database. Indeed, at the end of present method described in flowchart of FIG. 4, the resulting topology will be stored in a database. Moreover, information received during the next steps should be stored before being used. Such information could be stored in a memory such as a RAM or in the database.

In a next phase, the device will circle through the steps 410, 420 and 440, repeating them until one event such as a message is received (step 410), a user input is detected (step 420) or an EXIT message (to be described later, corresponding to the user ending the application program) is received (step 440). In other words, the device enters a waiting stage, checking for incoming messages or touch inputs. Possibly, the GUI may indicate such state via an animation, a message, or any means known to the man skilled in the art.

In the step 420, the device detects a user input on the touch screen. The touch input corresponds to a continuous user gesture as mentioned before started from or going to another device placed next to the device. The touch input comprises an initiation or starting location and a termination or ending location on the touch screen. Said otherwise, the initiation or starting portion of the touch input defines a first or starting location on the touch screen and the end or termination portion of the touch input defines a second or ending location on the touch screen.

In a step 421, the device determines if the starting location of the user input, detected by the touch screen, is within the START zone previously defined or not. If the starting or initiation location of the touch input is within the START zone, next step is step 428. Otherwise, next step of the method is step 422. Indeed, the continuous user gesture shall be started by the user on a device within the START zone, ideally highlighted using graphical object 202 previously described.

In the step 422, the value of the internal variable or parameter, called "interaction", initiated to the value "false" in step 401, is tested. As it will be described hereafter in step 410, the value of said internal parameter may be updated to "true" if a certain message is received. Basically, this internal parameter serves to firstly detect the beginning of the continuous user gesture over the group of devices and also to detect a user gesture incorrectly done. Thus, in step 422, coming from step 421, the touch input was detected outside the START zone. If the internal parameter value is "true" (step 422, choice "YES" of FIG. 4), it indicates that the interaction, i. e. the continuous user gesture, has been started at least on another device.

In a step 423, the device will then advertize or emit an entry message (in short, an IN message) comprising geographical information defined according to the first location defined in step 420, the entry or IN message comprising an information about the detection of the entry of the continuous user gesture. Geographical information may corresponds to the zones 213, 214, 215 or 216 described in FIG. 2B. In this case, geographical information will be an indication of one of the four zones 213, 214, 215 or 216 where the user input has been initiated. For example, if zone 213 is advertized, it means that the incoming continuous user gesture was coming from a device placed next to the left of the device represented in FIG. 2A or 2B and the user input was started within zone 213, quite probably near the edge of the touch screen. In another embodiment, the geographical information may correspond to the absolute position of the starting location defined using coordinates such as (x, y). The system can be improved by using the first portion of the user input and deduce from this first portion a position along the corresponding edge of the screen. Such result could be obtained by interpolating the first portion of the user input till the edge of the screen or by using a tangent to first portion and determining the intersection of this tangent with the corresponding edge of the screen. By corresponding edge of the screen, it should be understood here, the left edge for zone 213, the bottom edge for zone 214, the top edge for zone 215 and the right edge for zone 216. Intermediate embodiment will define more zones than the four zones 213, 214, 215 and 216 of FIG. 2B in order to improve the precision of the determination of the starting location on the touch screen device. This can be achieved for example by segmenting each zone 213, 214, 215 and 216 in two (or more) zones using lines passing through the center of the touch screen.

In short, in step 423, after detecting the initiation portion of the touch input at a first location on the touch screen, the device advertizes a first or IN message comprising geographical information defined according to the first location, the IN message comprising an information about the detection of the entry of a continuous user gesture on the touch screen of the device,

In a further step 424, the device detects the end portion of the touch input at a second location on the touch screen. Such end portion of the touch input on the device can correspond to two situations of the continuous user gesture:
(1) the continuous user gesture stops on the device (as illustrated in FIG. 3A and 3B on devices 305 and 315).
(2) the continuous user gesture continues from the device toward another device (as illustrated in FIG. 3A and 3B on devices 301, 302, 303, 304 and 311, 312, 313, 314),

Indeed, in the first situation, the end portion of the touch input will be located within the STOP zone, when in the second situation the end portion of the touch input will be located within the first zone. First situation will correspond to step 426 when second situation corresponds to step 425.

In the step 426, when the second location is within the STOP zone, the device will advertize a second or stop (in short, a STOP message) message, the STOP message comprising an information about the detection of the termination of the continuous user gesture.

In short, in step 426, after detecting the end portion of the touch input at a second location on the touch screen and when the second location is within the STOP zone, the device advertizes a second or STOP message, the STOP message comprising an information about the detection of the termination of the continuous user gesture on the touch screen of the device.

In the step 425, when the second location is not within the STOP zone, the device will advertize a third or out message (in short, an OUT message) associated to the second location, the OUT message comprising a geographical information, defined according to the location of the end portion of the touch input, about the detection of the exit of the continuous user gesture.

In short, in step 425, after detecting the end portion of the touch input at a second location on the touch screen and when the second location is outside the STOP zone, the device advertizes a third or OUT message comprising geographical information defined according to the second location, the OUT message comprising information about the detection of the exit of the continuous user gesture.

The step 427 corresponds to a situation where a starting location of a touch input has been detected outside the START zone in step 421 but the internal parameter, called "interaction", indicates that the process has not been initiated by any other device. This situation should not occur and may result from an error from the user. In this case, a RESET message is advertized. Said RESET message and its effect are described later when describing step 410. In other words, after detecting the initiation portion of the touch input at a first location, when detecting that the first location is not within the START zone and no START message has been received (as the internal parameter "interaction" value is not set to true), the device advertize a RESET message in place of the IN message (otherwise, if a START message has been received, internal parameter "interaction" value would indicate such situation, and a IN message would have been advertized, as described in step 423).

Step 428 corresponds to a situation where a starting location of a touch input has been detected within the START zone in step 421. From a user perspective, this situation corresponds to the starting of the continuous gesture on the first device. In this case, the value of the internal parameter "interaction" is checked. In other words, after detecting the initiation portion of the touch input at a first location, and when detecting that the first location is within the START zone and a START message has been already received, the device advertizes a RESET message in place of the START message.

In step 432, where the value of internal parameter "interaction" indicates that the interaction process is defined as already been started (for example, the value is set to true). Such situation is not coherent, indicating that the device is detecting the start of the continuous gesture while said starting has already been detected. This may be caused by a user breaking his continuous gesture or any error. In this case a RESET message is advertized.

In step 429, the internal parameter "interaction" value indicates that the interaction has not been already started, which is coherent with the fact that the device is detecting a starting touch input in step 421. In this case, the device advertizes a fourth or START message, the START message comprising information about the detection of the initiation of the continuous user gesture.

In the following step 430, similar to step 424, the device detects the ending location of the touch input, two situations may occur:
- (431) the ending location of the touch input is within a STOP zone, meaning that the user did a touch input starting in the START zone (step 421) and ending in the STOP zone (knowing moreover that START zone and STOP zone are in this embodiment chosen equal): this is incoherent, a RESET message is advertized in a step 431.
- (425) the ending location of the touch input is within a STOP zone. In this case, a step similar to step 425 is performed. The device advertizes an OUT message, the OUT message comprising geographical information, defined according to the ending location of the touch input, about the detection of the exit location of the continuous user gesture on the touch screen.

In other words, in step 431, after detecting the end portion of the touch input at a second location, when detecting that the second location is within the STOP zone, the device advertizes a RESET message in place of the STOP message.

Following steps 425, 426, 427, 431 or 432 and if the user does not request the application program to exit on the step 440, the device goes back to the steps 410 and 420, repeating these steps until a message is received (step 410), a touch input is detected (step 420) or an instruction to exit the application program is received (step 440).

In a step 410, the device receives a message. It should be noted here that when in the previously described steps the device sends or advertizes a message, a copy of the same message is also received by the same device. Indeed, a device detecting a touch input in step 420 and advertizing afterward a message is receiving or saving a copy of the same message, thus triggering the step 410 for itself. Nevertheless, depending on the embodiment of present system, a device may not need to receive a copy of messages advertized by the same device. For example, in an embodiment using a central server, only the central server needs to receive the messages.

In current embodiment description, where each device is executing the same application program (or at least module), all the messages should be received by the devices, including messages advertized by the same device.

Thus, following steps 425, 426, 427, 431 or 432, the device will trigger the step 410 (as all the other devices receiving the message). Obviously, step 410 will also be triggered if any other device is advertizing a message.

In step 410, six different types of messages may be received:
- **EXIT message:** this message is optional. Indeed, according to the embodiment, when the user selects in step 440 to exit the application program, the application program may or may not, in step 450, advertize an EXIT message. It may only exit the application program locally without advertizing it. Alternatively, it may advertize it, with an EXIT message, closing the application program on all the other devices. One way to implement this would be to offer a selection to the user when selecting to close the application program such as "close only this device" and "close on all devices". In the first case, the application program on the device will close whereas in second case, the application program will advertize an EXIT message before closing.
- **RESET message:** this message is sent by the device when an incoherency or an error is detected. In this case, all previously stored information (in the RAM or in the database), extracted from the different messages received are discarded ("discard map") and the internal parameter "interaction" is set to "false", indicating that the interaction process has not been started. From a user perspective that means that the continuous user gesture, if already started, has to be started again as an error has been detected.
- **START message:** this message is sent following step 429. The message indicates that the process has been started, meaning that the continuous user gesture starting has been detected on a device. In this case, the internal parameter "interaction" value is set to true. Also, to prevent incoherency in the database, all previously received information is discarded, as with the RESET message.
- **STOP message:** the message, sent in step 426, indicates that the ending of the continuous user gesture has been detected on a device. That means that the user has covered all the devices with his gesture and that all necessary information to compute the topology of the group of devices has been received. So, the device can begin the calculation of the topology, and possibly use the result of said topology to any other task (such as creating a single virtual display). Internal parameter "interaction" may be set to "false" in order to prepare the system to repeat if need be the process previously described.
- **IN message:** the device receives a message from an identified device, the message indicating that the entry of a continuous user gesture has been detected on the identified device at a given geographical location. Said information is stored in the memory or database.
- **OUT message:** the device receives a message from an identified device, the message indicating that an exit of a continuous user gesture has been detected on the identified device at a given geographical location. Said information is stored in the memory or database.

RESET messages are setup to detect and correct, by resetting the memory or database and the internal parameter value, possible inconsistent continuous user gesture. More precisely, situation that should not occur (such as a touch input with the initiation portion within the START zone when a START message has already be received, a touch input with the initiation portion within the START zone and the ending portion within the STOP zone or a touch input with an initiation portion outside the START zone when no START message has been received yet) are managed using a RESET message.

In order to compute the topology or map of the group of devices, the device uses the information stored in the database to deduce which devices are next to the other. The geographical information associated to each IN and OUT message allows positioning of one device edge relatively to another device edge.

Globally, the sequence of messages received by all devices of the group of devices should correspond to:
- a first START message, sent by the first device detecting a touch input started over a START zone (device 301 in FIGs. 3),
- a succession of OUT and IN messages, by "pair", corresponding respectively to a device detecting an exit of a user gesture toward another device and the corresponding entry of a user gesture on the another device, each message comprising geographical information on the user gestures (devices 301, 302, 303, 304 and 305 in FIGs. 3),
- a STOP message, sent by the last device of the group of device covered by the continuous user gesture, this device detecting a touch input terminated over a STOP zone (device 305 in FIGs. 3).

Hereafter is an example of the content of the messages stored in the memory or the database of a device according to the continuous user gesture illustration given in FIG. 3A:

**Table 1**

| Message number | Device ID | Message type | Geographical information | Interaction value |
|---|---|---|---|---|
| 1 | 301 | START | | True |
| 2 | 301 | OUT | 214 | True |
| 3 | 302 | IN | 215 | True |
| 4 | 302 | OUT | 216 | True |
| 5 | 303 | IN | 213 | True |
| 6 | 303 | OUT | 215 | True |
| 7 | 304 | IN | 214 | True |
| 8 | 304 | OUT | 215 | True |
| 9 | 305 | IN | 214 | True |
| 10 | 305 | STOP | | False |

This previous table 1 makes the assumption that all devices are oriented top up. But, if for example we consider that device 304 has been rotated by a 90° clockwise rotation, messages advertized by device 304 would have been:

**Table 2**

| Message number | Device ID | Message type | Geographical information |
|---|---|---|---|
| 7 | 304 | IN | 216 |
| 8 | 304 | OUT | 213 |

Indeed, in this case, the entry of the continuous user gesture on device 304 coming from device 303 would have been detected in zone 216, corresponding to the right side of the device 304, when the exit of the continuous user gesture toward device 305 would have been detected in zone 213, corresponding to the left side of the device 304.

In an alternative embodiment of present system, no START zone is defined. When detecting the initiation portion of a touch input at a first location on the touch screen, the device will advertize a IN message comprising geographical information defined according to the first location, the IN message comprising an information about the detection of the entry of a continuous user gesture on the touch screen of the device or advertize the IN message as a START message if the device has not received a START message. Indeed, when determining that no START message has been received yet, the device will consider that the detected touch input shall be considered not as an IN message but as a START message. The device will then advertize a START message. To determine if a START message has been received previously or not, the device can possibly check the value of the internal parameter "interaction".

In another alternative embodiment of present system no START zone is defined and no START message is advertized. Indeed, it will be the very first IN message received by a device that will be considered as being the START message. In other words, when a device receives a IN message, the device will check for possible previously received IN message, and if it appears that the received IN message is the first one, the device will consider the IN message as a START message, and manage the received IN message as a START message.

Message number may correspond to the order in which the messages are received, or, in a complementary embodiment, been determined according to a timestamp comprised in the messages. In this last case, advantageously, the devices may be previously or continuously synchronized by a technique known by the man skilled in the art. Timestamp may correspond to the time or moment when a message is advertized. Alternatively, the timestamp may advantageously correspond to the time or moment of the detection the initiation portion of the touch input at a first location for IN or START messages and of the detection the end portion of the touch input at a second location for OUT or STOP messages.

In another complementary embodiment, instead of advertizing two messages, a device may advertize a combination or aggregation of the two messages. In other words, in previous example, the device 303, instead of sending sequentially messages 5 and 6 may send only one message, said message combining the information contained in messages 5 and 6 according to a method known to the man skilled in the art.

As in current embodiment all messages are broadcasted to all the devices of the group, any device will have a similar copy of this database. Thus, all devices may calculate the topology of the group of devices.

Using this calculated topology, and receiving information from the devices such as their touch screen resolution, the size of the touch screen, orientation of the device (even if such information may be deduced from the topology), the devices may then calculate a single virtual display characteristics. One of the device, or possibly another device not belonging to the group of device, may then share a content in portion according the characteristics of the single virtual display and send the said portion to the devices to be displayed.

This situation is illustrated in FIG. 5, where a photo or video of a map is shared among the devices 501, 502, 503 and 504 aggregated as a single virtual display.

FIG. 5 illustrates also the fact that previously described method in flowchart of FIG. 4 may have to deal with redundant information or messages. Indeed, to perform a continuous user gesture from device 501 to device 504, a user will need to make a "back and forth" gesture 510 between devices 502 and 503, thus sending two pair of messages concerning the junction between devices 502 and 503. This is not an issue as long as the geographical information are coherent (that is to say that the two devices respective position has not been modified between the continuous user gesture from 502 to 503, and the continuous user gesture way back from 503 to 502). Such situation may be dealt for example with by ignoring a second redundant pair of messages or by calculating an average location from the different geographical information received.

FIG. 6 shows an illustration of the Tokyo University of Technology method "Pinch" (prior art) as described previously.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system to deduce topography of a group of devices may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) unless specified otherwise in the description of an embodiment of present system, the term "greater than" (respectively "lower than") should be understood as "strictly greater than" (resp. "strictly lower than") or "greater than or equal to" (resp. "lower than or equal to"), both implementation being possible.

## Claims

1. A method for characterizing a touch input received on a touch screen of an electronic device, a first and a second zones being defined on the touch screen, the touch input comprising an initiation portion and an end portion, wherein:
- the first zone corresponds to:
• the entry of a continuous user gesture coming from or,
• the exit of the continuous user gesture going on to another electronic device placed next to the electronic device,
- the second zone, or stop zone, corresponds to the termination of the
continuous user gesture on the touch screen of the electronic device, the method comprising for said electronic device the steps of:
- detecting the initiation portion of the touch input at a first location on the touch screen,
- advertizing a first or in message comprising geographical information defined according to the first location, the in message comprising an information about the detection of the entry of a continuous user gesture on the touch screen of the device,
- detecting the end portion of the touch input at a second location on the touch screen:
• when the second location is within the stop zone, advertizing a second or stop message, the stop message comprising an information about the detection of the termination of the continuous user gesture, or,
• advertizing a third or out message comprising geographical information defined according to the second location, the out message comprising information about the detection of the exit of the continuous user gesture.

2. A method according to claim 1, wherein the first zone comprises at least a portion of the periphery of the touch screen.

3. A method according to the previous claim 2, where the first zone comprises the entire periphery of the touch screen, the second or stop zone being surrounded by the first zone.

4. A method according to one of the previous claims, further comprising:
- advertizing a fourth or start message, the start message comprising information about the detection of the initiation of the continuous user gesture.

5. A method according to the previous claim, further comprising:
- advertizing the in message as a start message if the electronic device has not received a start message.

6. A method according to the previous claim, a third or start zone being defined on the touch screen, the start zone corresponding to the initiation of the continuous user gesture on the touch screen of the electronic device, the method further comprising after detecting the initiation portion:
- when detecting that the first location is within the start zone, advertizing the start message in place of the in message.

7. A method according to the previous claim, wherein the start zone and the stop zone are chosen to be equal.

8. A method according to one of the previous claims, wherein the advertising of a start, stop, in or out message corresponds to a broadcasting of the messages.

9. A method according to one of the previous claims, wherein the start, stop, in or out messages comprise the timestamp of the detection of the touch input at their corresponding location.

10. The method according to one of the previous claims, the method further comprising:
- receiving a plurality of messages from at least another electronic device, each message being one of an in, out, start or stop message,
- determining, after receiving a stop message, the position of the electronic device with regards to the at least another electronic device, using the received messages.

11. The method according to one of the previous claims, the method further comprising, after detecting the initiation portion of the touch input at a first location, when detecting that the first location is not within the start zone and no start message has been received, the step of advertizing a reset message in place of the in message, the reset message comprising information about the detection of an incoherent continuous user gesture.

12. The method according to one of the previous claims, the method further comprising, after detecting the initiation portion of the touch input at a first location, when detecting that the first location is within the start zone and a start message has been received, the step of advertizing a reset message in place of the start message.

13. The method according to claim one of the previous claims, the method further comprising, after detecting the end portion of the touch input at a second location, when detecting that the second location is within the stop zone, the step of advertizing a reset message in place of the stop message.

14. An electronic device comprising a touch screen, a first and a second zones being defined on the touch screen, the first zone corresponding to:
- the entry of a continuous user gesture coming from or,
- the exit of the continuous user gesture going on to another electronic device placed next to the electronic device, and the second zone, or stop zone, corresponding to the termination of the continuous user gesture on the touch screen of the electronic device,
the electronic device further comprising a processor arranged to:
- detect the initiation portion of the touch input at a first location on the touch screen,
- advertize a first or in message comprising geographical information defined according to the first location, the in message comprising an information about the detection of the entry of a continuous user gesture on the touch screen of the device,
- detect the end portion of the touch input at a second location on the touch screen, and:
• when the second location is within the stop zone, advertize a second or stop message, the stop message comprising an information about the detection of the termination of the continuous user gesture, or,
• advertize a third or out message comprising geographical information defined according to the second location, the out message comprising information about the detection of the exit of the continuous user gesture.

15. An application program embodied on a non-transitory computer readable medium and arranged to execute the method of claims 1 to 13.
